# EUROPÄISCHE PATENTSCHRIFT

(11) **EP 2 624 992 B1**
(45) Veröffentlichungstag und Bekanntmachung des Hinweises auf die Patenterteilung: **30.07.2014**
(21) Anmeldenummer: 11773430.1
(22) Anmeldetag: 05.10.2011
(51) Int. Cl.: B23K 1/00, B23K 11/11, B23K 11/25, B23K 11/31

(54) **SCHWEISSKOPF MIT EINEM KRAFTSENSOR, EINER FEDER UND EINEM STELLELEMENT**
WELDING HEAD WITH A FORCE SENSOR, A SPRING AND AN ADJUSTING ELEMENT
TÊTE À SOUDER DOTÉE D'UN CAPTEUR DE FORCE, D'UN RESSORT ET D'UN ÉLÉMENT DE RÉGLAGE

(30) Priorität: 06.10.2010 DE 102010042085
(43) Veröffentlichungstag der Anmeldung: 14.08.2013
(73) Patentinhaber: Siemens Aktiengesellschaft, 80333 München (DE)
(72) Erfinder: KAUSSLER, Johann, 92521 Schwarzenfeld (DE)
(86) Internationale Anmeldenummer: PCT/EP2011/067362
(87) Internationale Veröffentlichungsnummer: WO 2012/045763

(56) Entgegenhaltungen:
- EP-A2- 1 442 819
- US-A- 4 419 558
- US-A- 4 504 724

## Beschreibung

Die Erfindung betrifft einen Schweißkopf zur Durchführung des Widerstandsschweißens, Widerstandslötens oder Warmnietens gemäß dem Oberbegriff des Anspruchs 1 (siehe, z.B., US 4 419 558 A), wobei die zu verbindenden Werkstücke durch Widerstandserwär-mung bei gleichzeitig ausgeübter Druckkraft (Schweißkraft) auf eine Fügestelle (beim Schweißen die sog. Schweißstelle) stoffschlüssig oder über Lot miteinander verbunden werden.

Beim Widerstandsschweißen werden zwei elektrisch leitfähige Werkstücke durch einen elektrischen Stromfluss bis zum Aufschmelzen erhitzt. Die Schmelze erstarrt nach dem Stromfluss und bildet eine Schweißverbindung. Hierbei wird die Bindung einer innigen Verbindung ggf. durch Zusammendrücken während und nach dem Stromfluss unterstützt (Widerstands-Press-schweißen). Das Widerstandsschweißen erfolgt im Allgemeinen ohne Zufuhr eines Zusatzwerkstoffes. Das Widerstands-Punktschweißen als Sonderform des Widerstandsschweißens wird bei-spielsweise zur Verbindung von Stahlblechen im Karosserie-und Fahrzeugbau verwendet. Es dient aber auch zum Verschwei-ßen von Aluminium oder anderen Metallen, z. B. bei der Herstellung von Kondensatoren, Anschlüssen von Spulen und Motorwicklungen oder Kontaktsätzen für Relais- und LeitungsSchutzschalter. Das Widerstands-Punktschweißen bietet den Vorteil, innerhalb kürzester Zeit eine hohe Energie in Form von elektrischem Strom auf eine kleine Fläche eines Werkstücks zu konzentrieren, wobei unter Zuführung von hohem Druck, welcher pneumatisch oder elektromechanisch aufgebracht wird, eine unlösbare Verbindung entsteht.

Beim Widerstandslöten erzeugt ein elektrischer Stromschluss an einer Lötstelle Wärme. Es eignet sich zum Verlöten von Teilen ungleicher Masse, beispielsweise von Kleinteilen auf Bleche, die eine hohe Wärmeleitfähigkeit besitzen. Die Lötstelle bildet hierbei einen elektrischen Widerstand und erwärmt sich direkt.

Für die beschriebenen Anwendungsgebiete sind Schweißköpfe bekannt. Diese tragen eine Elektrode, welche in Richtung einer Gegenelektrode beweglich gelagert sind. Die zu fügenden Werkstücke werden zunächst zwischen beiden Elektroden positioniert und anschließend durch eine Bewegung der Elektrode des Schweißkopfes auf die Gegenelektrode gedrückt. Während des Verbindungsprozesses kommt es durch eine erforderliche Prozesstemperatur und Schweißkraft zu einer Materialerweichung, welche durch den Druck der Elektroden auf die Werkstücke zu einem so genannten Nachsetzen des Schweißkopfes führt.

Aus dem Stand der Technik ist ein Schweißkopf mit einem Antrieb und mit einer Elektrode, welche beweglich gelagert ist, bekannt, vgl. "Mikroschweisskopf mit einstellbarer Elektrodenkraft", im Internet erhältlich unter www.isomatic.com/html/Deutsh/ksk.htm am 28.09.2010. Hierbei kann die Schweißkraft zwischen 0,7 und 200 Newton eingestellt werden.

Ein Schweißkopf mit einem Antrieb und einer Elektrode, welche beweglich gelagert ist, ist auch aus dem Dokument "Constant Force Weld Head by MacGregor" erhältlich im Internet unter http://www.macgregorsystems.com/files/downloads/Constant%20Force%20Weld%20Head.pdf am 05.10.2010, bekannt.

Im Stand der Technik wird eine Einstellung und Kontrolle ei-ner Schweißkraft, d.h. der von der Elektrode auf die Werkstü-cke ausgeübten Druckkraft, indirekt durch einen Druckminderer an einem pneumatischen Zylinder des Antriebs vorgenommen. Alternativ wird ein Kraftsensor zwischen der Elektrode und einer Werkstückträgeraufnahme positioniert, um die Schweißkraft zu messen. Diese direkte Art der Messung ist jedoch für jede Anwendung unterschiedlich und aufwendig.

Der Erfindung liegt daher die Aufgabe zugrunde, einen Schweißkopf mit einem Kraftsensor anzugeben, welcher eine Messung der Schweißkraft vereinfacht und/oder verbessert.

Diese Aufgabe wird durch einen Schweißkopf mit einem Kraftsensor gelöst, bei dem ein Antrieb, ein elastisches Element, der Kraftsensor und eine beweglich gelagerte Elektrode in einer Linie angeordnet sind, so dass eine Wirkungslinie einer Kraft, welche ausgehend von dem Antrieb oder dem elastischen Element auf die Elektrode wirkt, zentrisch durch den Kraftsensor und die Elektrode verläuft. Der Schweißkopf ist da-durch gekennzeichnet, dass das elastische Element zwischen dem Antrieb und dem Kraftsensor angeordnet ist. Der Schweißkopf ist weiterhin dadurch gekennzeichnet, dass er mit einem Stellelement ausgerüstet ist, insbesondere einer Stellmutter, welches mit dem Antrieb fest verbunden, aber in Relation zum Antrieb verstellbar ist, und welches in einem komprimierten Zustand des elastischen Elements auf Anschlag mit einem Anschlagelement, insbesondere einem Anschlagstift, welches mit einer Führungswelle des elastischen Elements fest verbunden ist, stellbar ist, wodurch das elastische Element in dem komprimierten Zustand fixierbar ist.

Der Schweißkopf ist also durch ein Zusammenwirken des Stell-elements mit dem Anschlagelement in einen Montagezustand überführbar, in welchem das elastische Element in einem kom-primierten Zustand fixiert ist und der Kraftsensor daher in den Schweißkopf einsetzbar oder aus dem Schweißkopf entnehmbar ist. Dies ermöglicht einen einfachen und schnellen Ein- und Ausbau des Kraftsensors.

Der Schweißkopf erfüllt die steigenden Anforderungen in der Montagetechnik, eine Prozessfähigkeit zu dokumentieren. Gerade der Parameter einer konstanten Schweißkraft ist hierbei von großer Bedeutung. Bei bestimmten Anwendungen muss die Schweißkraft bei jeder Schweißung gemessen und protokolliert werden. Die Konstruktion des Schweißkopfs ermöglicht hierbei eine Messung und Protokollierung der Schweißkraft im direkten Kraftfluss bei jeder Schweißung. Dies unterstützt die Prozesskontrolle. Gleichzeitig entfällt die Notwendigkeit einer aufwendigen Platzierung des Kraftsensors zwischen Elektrode und Werkstückträgeraufnahme.

Der Schweißkopf ermöglicht eine einfache und schnelle Messung zum Kontrollieren und zum Einstellen der Schweißkraft für unterschiedliche Anwendungen im Praxisbetrieb, um den Prozess nicht zu lange zu unterbrechen. Außerdem ist ein direktes Messen der Schweißkraft bei jeder Schweißung zur Prozessüberwachung möglich. Weiterhin können sogar Schweißkraftschwankungen während des Schweißens erfasst werden. Auch nichtstationäre Kontrollmessungen sind möglich.

Die lineare Anordnung von Antrieb, elastischem Element und Elektrode optimiert das Nachsetzverhalten der Elektrode, da keine Kraftmomente zwischen dem Antrieb und der Fügestelle oder zwischen dem elastischen Element und der Fügestelle auf-treten können. Ein Kraftmoment würde eine erhöhte Reibung in Führungen der Elektrode bewirken und eine höhere Trägheit und damit ein schlechteres Nachsetzverhalten des Schweißkopfes nach sich ziehen. Demgegenüber ermöglicht der erfindungsgemä-ße Schweißkopf eine optimal ausgelegte Regelung des Nachsetz-verhaltens, welche in direkter Nähe der Fügestelle realisiert ist. Ein wichtiger Vorteil dieser Konstruktion ist somit der direkte Kraftfluss vom Antrieb über das elastische Element bis hin zur Elektrode. Hierbei dient das elastische Element der Nachsetzregelung. Da die Wirkungslinie der Schweißkraft zentrisch und längs durch die Elektrode verläuft, treten keine Relativbewegungen zu den Werkstücken auf. Dies führt zu einer hohen Reproduzierbarkeit und wenig Elektrodenver-schleiß.

Die Konstruktion ermöglicht ferner eine kompakte Bauweise des Schweißkopfes. Dadurch sind auch ergonomische und teilmechanisierte Lösungen möglich. Ferner ist eine Einbaulage des Schweißkopfes beliebig. Auch lässt sich der Schweißkopf ein-fach isolieren. Die kompakte Bauweise ermöglicht ferner den Einsatz des Schweißkopfes als Basiskonzept im Rahmen eines Plattformkonzepts, welches diese Ressource verwendet. Auch kann der Schweißkopf durch seine bewegliche Elektrode für unterschiedliche Materialfluss-Systeme wie etwa Schieberaufnahme, Drehteller oder Werkstückträger eingesetzt werden.

Der Kraftsensor wird also direkt zwischen dem elastischen Element, beispielsweise einer Druckfeder, und der Elektrode eingesetzt, und liegt somit direkt im Kraftfluss zwischen dem elastischen Element und der Elektrode. Er ermittelt daher die tatsächlich aufgebrachte Schweißkraft unmittelbar und ohne Umwege über zwischengeschaltete Elemente. Der Kraftsensor kann hierbei stationär im Schweißkopf verbleiben oder einfach ein- und ausgebaut werden. Bereits im Einsatz befindliche Schweißköpfe, die anstelle des Kraftsensors ein Distanzstück beinhalten, können einfach nachgerüstet werden.

In einer darauf aufbauenden Weiterbildung ist das Stellele-ment eine Stellmutter, welche mit einem O-Ring gegen Verdrehung gesichert ist.

Gemäß einer Ausführungsform ist der Kraftsensor eine Kraftmessdose mit Dehnungsmessstreifen (DMS), auch bezeichnet als DMS-Kraftaufnehmer. Diese Ausführungsform unterstützt den einfachen Ein- und Ausbau des Kraftsensors durch die modulare Bauform der Kraftmessdose.

Bei dem Herstellungsverfahren für einen Schweißkopf, dessen Antrieb aus mindestens einem pneumatischen Zylinder besteht, wird die Elektrode um einen Elektrodenhub während eines Ausfahrens des pneumatischen Zylinders vorgeschoben, bis die Elektrode auf ein Werkstück aufsetzt. Das elastische Element wird um einen Federweg während des Ausfahrens des pneumatischen Zylinders komprimiert, nachdem die Elektrode auf das Werkstück aufgesetzt hat, wobei der Federweg die Differenz des Zylinderhubs und des Elektrodenhubs bildet und wodurch der Schweißkopf in einen zweiten Montagezustand überführt wird. Ein Stellelement, insbesondere eine Stellmutter, welches mit dem Antrieb fest verbunden, aber in Relation zum Antrieb verstellbar ist, wird auf Anschlag mit einem Anschlagelement, insbesondere einem Anschlagstift, welches mit einer Führungswelle des elastischen Elements fest verbunden ist, gestellt, so dass das elastische Element in seinem komprimierten Zustand fixiert wird. Hierdurch wird der Schweißkopf in einen dritten Montagezustand überführt. Der pneumatische Zylinder wird eingefahren, wodurch der Schweißkopf in einen vierten Montagezustand überführt wird, in welchem der Kraft-sensor in den Schweißkopf eingesetzt wird. Abschließend wird der pneumatische Zylinder erneut ausgefahren, wobei die Elektrode erneut auf das Werkstück aufsetzt, woraufhin das Stellelement in seine ursprüngliche Position zurückgestellt wird.

Das Herstellungsverfahren ermöglicht einen einfachen und schnellen Einbau des Kraftsensors.

In einer Weiterbildung ist der Schweißkopf zu einer Bewegung der Elektrode synchron zum Antrieb eingerichtet, solange die Elektrode an keinem Werkstück anliegt, indem eine Druckkraft vom Antrieb auf die Elektrode ausgeübt wird. Weiterhin ist der Schweißkopf zu einer Entkoppelung der Elektrode vom Antrieb und zu einer Bewegung der Elektrode relativ zum Antrieb mittels des elastischen Antriebs eingerichtet, solange die Elektrode an einem Werkstück anliegt.

Eine Druckkraft auf die zu verbindenden Werkstücke wird hierbei direkt vom Antrieb in die bewegliche Elektrode des Schweißkopfes eingebracht. Auch eine Federwirkung des elasti-schen Elements geht auf direktem Wege in die Elektrode ein. Der Kraftfluss von Antrieb und elastischem Element ist beim Nachsetzverhalten jedoch getrennt. Somit ist eine Federkraft des elastischen Elements von einer Kraft des Antriebs mechanisch entkoppelt. Dies führt zu einer hohen reproduzierbaren Qualität von Widerstandsschweißungen und ermöglicht es, auch anspruchsvollste Buntmetallschweißungen durchzuführen. Die Entkoppelung des Antriebs gegenüber der Elektrode mittels des elastischen Elements verringert Reibungsverluste und erhöht die Reproduzierbarkeit.

Gemäß einer Ausführungsform ist das elastische Element des Schweißkopfes eine Druckfeder, insbesondere eine Schraubenfeder, welche zur Übertragung einer Schweißkraft auf die Elektrode angeordnet und für eine Regelung einer Nachsetzbewegung der Elektrode gegenüber einem Werkstück ausgelegt ist.

Druckfedern sind Bauteile, welche unter Belastung nachgeben und nach Entlastung in ihre ursprüngliche Form zurückkehren, sich also elastisch rückstellend verhalten. Die rücktreibende Kraft einer Druckfeder ist nach dem Hookeschen Gesetz proportional zu einer Verschiebung eines Kraftangriffspunktes entgegen einer Kraftrichtung, in welcher die Druckfeder wirkt.

Die zuvor genannte Ausführungsform bietet den Vorteil, dass die Druckfeder den Nachsetzweg regelt und gleichzeitig die Schweißkraft während der Prozessdauer nahezu konstant hält. Die Druckfeder ermöglicht somit ein optimales Nachsetzverhalten der Elektrode während des Schweißens. Der Schweißkopf kann daher für anspruchsvollste Buntmetallschweißungen ver-wendet werden.

In einer Weiterbildung ist der Antrieb des Schweißkopfes durch mindestens einen pneumatischen Zylinder realisiert. In einer darauf aufbauenden Weiterbildung ist der Schweißkopf zum Vorschub der Elektrode um einen Elektrodehub während ei-nes Ausfahrens des pneumatischen Zylinders eingerichtet, bis die Elektrode auf ein Werkstück aufsetzt. Weiterhin ist der Schweißkopf zu einer Kompression des elastischen Elements um einen Federweg während des Ausfahrens des pneumatischen Zy-linders eingerichtet, nachdem die Elektrode auf das Werkstück aufgesetzt hat, wobei der Federweg die Differenz des Zylinderhubs und des Elektrodenhubs bildet und gemeinsam mit einer Vorspannung des elastischen Elements eine Schweißkraft defi-niert, welche auf das Werkstück ausgeübt wird. Abschließend ist der Schweißkopf eingerichtet zum Vorschub der Elektrode um einen Nachsetzweg während eines Schweißvorgangs mithilfe des elastischen Elements, wobei die Kompression des elastischen Elements um den Nachsetzweg vermindert wird.

Diese Weiterbildung beschreibt die zuvor beschriebene Entkoppelung von Elektrode und Antrieb im Detail. Die zuvor genannten Vorteile gelten entsprechend.

Gemäß einer darauf aufbauenden Weiterbildung weist der Schweißkopf einen Sensor auf, welcher zur Erkennung eines Ausbleibens der Kompression des elastischen Elements während des Ausfahrens des pneumatischen Zylinders eingerichtet ist. Hierdurch ist ein Fehlen eines Werkstücks detektierbar. Das Signal des Sensors kann hierbei auch als Startsignal für einen Schweißprozess herangezogen werden, da hierbei kontrol-liert werden kann, ob Werkstücke zum Schweißen vorhanden sind.

In einer anderen Weiterbildung ist der Schweißkopf mit einem Messtaster ausgestattet, welcher zur Messung des Nachsetzwegs der Elektrode angeordnet ist. Der Messtaster misst hierbei den Nachsetzweg der Elektrode während des Schweißens. Vorteilhaft wirkt sich hierbei aus, dass der Messtaster kontinuierlich während des gesamten Schweißvorgangs arbeiten kann. Dies führt zu einer sicheren Prozesskontrolle. Der Nachsetzweg kann hierbei direkt aus dem Federweg gewonnen werden.

Gemäß einer Ausführungsform ist die Elektrode des Schweißkopfs zwischen zwei beidseitig angeordneten Elektrodenführun-gen, insbesondere Kugelführungen, beweglich geführt.

Hierbei werden die Elektrodenführungen in einer Elektrodenebene paarweise der Elektrode angeordnet, wobei die Schweißkraft zentral durch die Elektrode geführt wird. Dies bietet den Vorteil, dass eine Reibung in den Elektrodenführungen verringert wird. Dies reduziert auch die Trägheit des Schweißkopfes und führt insgesamt zu einem besseren Nachsetzverhalten der Elektrode beim Schweißen. Auch hierbei wirkt sich vorteilhaft aus, dass der zuvor beschriebene Kraftfluss bzw. die Wirkungslinie der Kraft in einer Linie mit der Elektrode, aber auch der Elektrodenführung liegen. Weiterhin bietet diese Konstruktion den Vorteil, dass ein Elektrodenhalter, welcher die bewegliche Elektrode aufnimmt, nur eine geringe Masse aufweist. Dies führt zu einer geringed Massen-trägheit und hohen Elektrodenbeschleunigungen. Die Kugelführungen bieten den besonderen Vorteil, die Reibwerte in den Elektrodenführungen zusätzlich zu senken. Insgesamt wird hierdurch das dynamische Verhalten des Schweißkopfes unter-stützt.

Gemäß einer Ausführungsform der Erfindung weist der Schweiß-kopf eine Kühlwasserdurchführung auf, welche zur Kühlung der Elektrode eingerichtet ist. Hierdurch können konstante Wärmeverhältnisse erzielt werden.

Der Schweißkopf eignet sich zum Schweißen, insbesondere dem Widerstandsschweißen, Widerstands-Pressschweißen und Widerstands-Punktschweißen, zum Löten, insbesondere auch dem Widerstandslöten, oder auch zum Warmnieten. Dies bietet den Vorteil, dass der Schweißkopf durch Verfahrenssubstitution als Ressource für unterschiedliche Verbindungstechnologien genutzt werden kann.

Im Folgenden werden Ausführungsbeispiele der Erfindung anhand von Figuren näher erläutert. Es zeigen:
- Figur 1: vier Betriebszustände eines Schweißkopfes,
- Figur 2: eine Ansicht eines Schweißkopfes mit einer Zerlegung in seine Bestandteile,
- Figur 3A: eine Frontalansicht mit einem Schnitt durch einen Schweißkopf,
- Figur 3B: eine Seitenansicht auf einen Schweißkopf,
- Figur 3C: eine Aufsicht auf einen Schweißkopf,
- Figur 4A: einen zweiten Montagezustand eines Schweißkopfes zum Einbau eines Kraftsensors
- Figur 4B: einen dritten Montagezustand eines Schweißkopfes zum Einbau eines Kraftsensors
- Figur 4C: einen vierten Montagezustand eines Schweiß-kopfes zum Einbau eines Kraftsensors

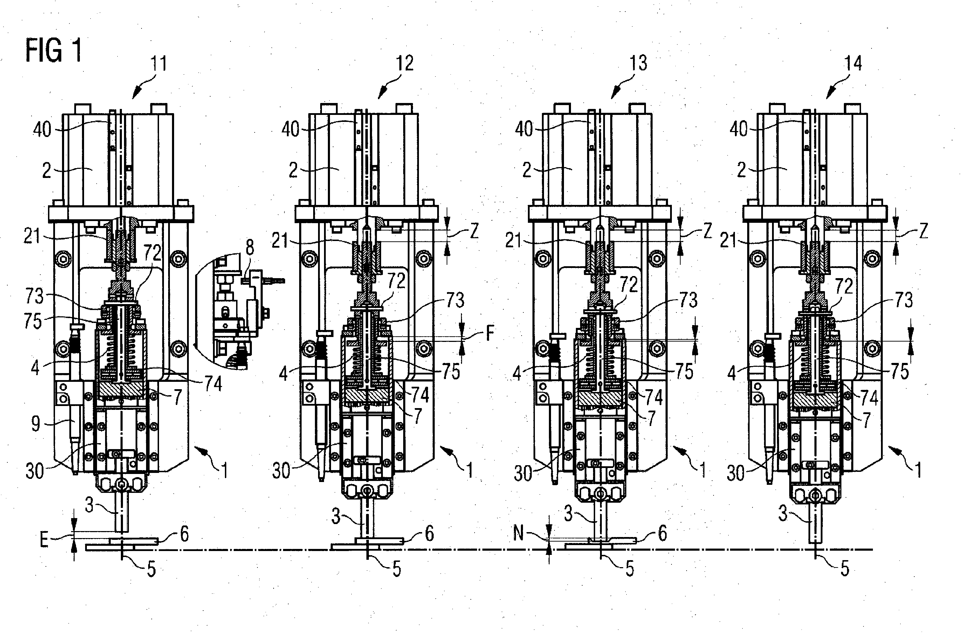

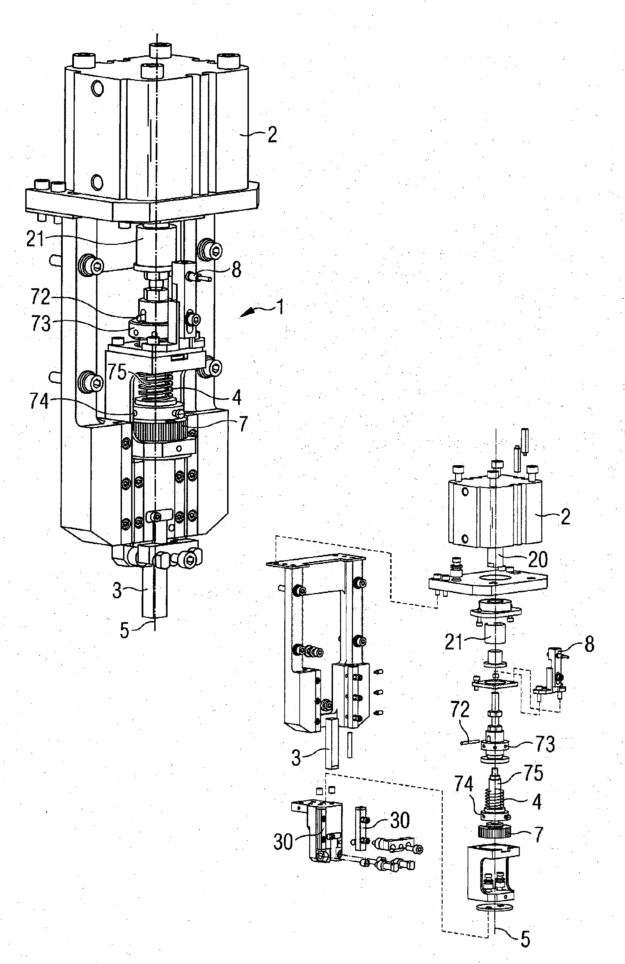

Figur 1 zeigt einen Schweißkopf 1 in einem ersten Betriebszu-stand 11, einem zweiten Betriebszustand 12, einem dritten Betriebszustand 13 sowie einem vierten Betriebszustand 14. Der Schweißkopf 1 setzt sich jeweils aus einem Antrieb 2, einer Elektrode 3, einem elastischen Element 4, einem Sensor 8, einem Messtaster 9 und Elektrodenführungen 30 zusammen. Der Antrieb 2, das elastische Element 4 und die Elektrode 3 sind in einer Wirkungslinie 5 angeordnet. Unter dem Schweißkopf 1 sind jeweils zwei Werkstücke 6, welche miteinander ver-schweißt werden sollen, eingezeichnet. Der Antrieb 2 beinhal-tet zwei Endlagenabfragen 40. Die genaue Anordnung des Sensors 8 kann den weiteren Figuren, die später beschreiben werden, entnommen werden. Das elastische Element 4 ist in Figur 1 als Druckfeder, genauer als Schraubenfeder gezeigt. Der Antrieb 2 beinhaltet beispielsweise einen oder mehrere pneumatische Zylinder, welche in Figur 1 nicht näher eingezeichnet sind. Der Antrieb 2 entfaltet seine Antriebskraft entlang der Wirkungslinie 5 und überträgt sie entlang der Senkrechten auf die weiteren in Figur 1 sichtbaren Elemente des Schweißkopfes 1, insbesondere das elastische Element 4 und die Elektrode 3. Ein galvanischer Überzug der Elektrode 3 verhindert eine Kor-rosion der Elektrode 3 und vermeidet Kontaktwiderstandsverän-derungen.

Weiterhin zeigt Figur 1 einen Kraftsensor 7, welcher, gemäß der Erfindung, zwischen dem elastischen Element 4 und der Elektrode 3 angeordnet ist.

Der Kraftsensor 7 liegt somit im direkten Kraftfluss zwischen dem Antrieb 2, dem elastischen Element 4 und der Elektrode 3. Ein Anschlagstift 72 ist mit einer Führungswelle 75 des elastischen Elements 4 verbunden. Er ermöglicht im Zusammenspiel mit einer Stellmutter 73, die mittels einer Verdrehsicherung über O-Ring an einer Verlängerung des Antriebs 2 bzw. an einer Verlängerung eines pneumatischen Zylinders des Antriebs 2 fest montiert ist, einen einfachen Ein- und Ausbau des Kraftsensors 7. Dieses Zusammenspiel ist weiter unten im Detail beschrieben. Anstelle des Kraftsensors 7 kann auch ein Dis-tanzstück verbaut werden, welches sich zu einem späteren Zeitpunkt durch den Kraftsensor 7 ersetzen lässt.

Ein Kraftsensor (auch als Kraftaufnehmer bezeichnet) misst eine Kraft, die auf ihn wirkt. Beispielsweise misst ein do-senförmiger Kraftsensor eine Verformung seines Metallkörpers mithilfe von Dehnungsmessstreifen, deren elektrischer Wider-stand sich mit der Verformung ändert.

Eine zweite Stellmutter 74, welche auf der Führungswelle 75 montiert ist, dient dazu, eine Vorspannung des elastischen Elements 4 einzustellen.

Im ersten Betriebszustand 11 befindet sich der Schweißkopf 1 in einer Grundstellung. Im Folgenden wird davon ausgegangen, dass der Antrieb 2 mit einem pneumatischen Zylinder reali-siert ist, der im ersten Betriebszustand 11 eingefahren ist. Der pneumatische Zylinder befindet sich hierbei entlang der Wirkungslinie 5 im Antrieb 2. In Verlängerung des pneumatischen Zylinders ist in Figur 1 eine Distanzhülse 21 eingezeichnet, welche einen Zylinderhub Z des pneumatischen Zylinders im ersten Betriebszustand 11, in dem der pneumatische Zylinder eingefahren ist, begrenzt. Mithilfe der Distanzhülse 21 ist der Zylinderhub Z des pneumatischen Zylinders variabel einstellbar. Zur Veränderung des Zylinderhubs Z ist die Distanzhülse 21 durch eine Distanzhülse mit geeigneten Abmessun-gen auszutauschen. Das elastische Element 4 ist im ersten Betriebszustand 11 vorgespannt.

Im zweiten Betriebszustand 12 ist der pneumatische Zylinder vollständig ausgefahren und hat hierbei den Zylinderhub Z zurückgelegt. Die Elektrode 3 hat beim Übergang vom ersten Betriebszustand 11 in den zweiten Betriebszustand 12 einen Elektrodehub E zurückgelegt und auf die Werkstücke 6 aufge-setzt. Da die Elektrode 3 auf die Werkstücke 6 bereits aufsetzt, bevor der pneumatische Zylinder um den gesamten Zylinderhub Z ausgefahren ist, wird das elastische Element 4 zusätzlich zu der bereits im ersten Betriebszustand 11 vorhandenen Vorspannung noch um einen Federweg F zusammengedrückt, der in Figur 1 ebenfalls gezeigt ist. Das elastische Element 4 ist im zweiten Betriebszustand 12 folglich überdrückt. Die Elektrode 3 drückt nun mit einer Schweißkraft auf die Werkstücke 6.

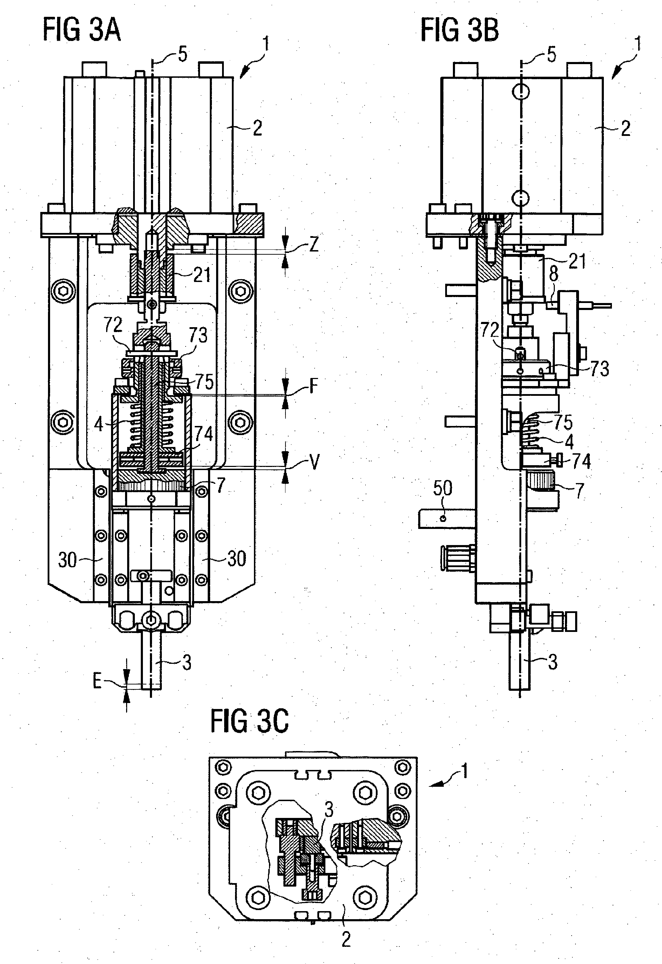

Die Schweißkraft ergibt sich hierbei aus der Vorspannung des elastischen Elements 4 und dem Federweg F. Sie kann variabel zwischen 240 und 1400 N eingestellt werden. Die Einstellung erfolgt ggf. im zweiten Betriebszustand 12. Hierzu wird eine Vorspannung V (in Figur 3A eingezeichnet) des elastischen Elements 4 beispielsweise zwischen 1,8 und 8,5 mm eingestellt. Der Federweg F wird beispielsweise zwischen 1 und 3 mm, vorzugsweise bei 1,5 mm eingestellt. Je nach Konstruktion können sich auch andere Grenz- und Richtwerte für die Schweißkraft, den Federweg F und die Vorspannung V ergeben.

Der Zylinderhub Z setzt sich aus dem Elektrodehub E und dem Federweg F zusammen. Der Messtaster 9 ist als induktiver Auf-nehmer ausgeführt und misst während des Schweißvorgangs das Nachsetzen der Elektrode 3.

Der Schweißvorgang findet zwischen dem zweiten Betriebszustand 12 und dem dritten Betriebszustand 13 statt, und ist in letzterem bereits abgeschlossen. Während des Schweißvorgangs sinkt die Elektrode 3 um den Nachsetzweg N in die Werkstücke 6 ein. Entsprechend verringert sich die Kompression des elastischen Elements 4 ausgehend vom Federweg um den Nachsetzweg N.

Der vierte Betriebszustand 14 zeigt den Fall, dass der pneumatische Zylinder um den Zylinderhub Z vollständig ausgefah-ren wird, wobei jedoch keine Werkstücke 6 vorhanden sind, weshalb die Elektrode 3 ins Leere geschoben wird. In diesem Fall findet also keine Kompression des elastischen Elements 4 um den Federweg F statt, d.h. das elastische Element 4 ist im vierten Betriebszustand 14 nicht beaufschlagt. Dies kann durch den Sensor 8 detektiert werden und dient zur Kontrolle, ob Werkstücke zum Schweißen vorhanden sind.

Zusammenfassend bewegt sich die Elektrode 4 solange synchron zum Antrieb 2 bzw. zur Bewegung des pneumatischen Zylinders, wie sie an keinem Werkstück 6 anliegt. Sobald die Elektrode 3 an einem Werkstück 6 anliegt, wird sie vom Antrieb 2 entkoppelt und bewegt sich relativ zu der Bewegung des pneumati-schen Zylinders. Dies wird durch das elastische Element 4 ermöglicht.

Figur 2 zeigt erneut einen Schweißkopf 1 mit einem Antrieb 2, einer Elektrode 3 und einem elastischen Element 4, welche erneut auf einer Wirkungslinie 5 angeordnet sind. Zusätzlich sind auch ein Sensor 8, eine Distanzhülse 21, ein pneumatischer Zylinder 20 und Elektrodenführungen 31 eingezeichnet. Die genannten Elemente haben die gleiche Funktion wie zuvor beschrieben. Figur 2 zeigt die Montage der genannten Elemente im Detail.

Weiterhin zeigt Figur 2 einen Kraftsensor 7, welcher zwischen dem elastischen Element 4 und der Elektrode 3 angeordnet ist. Der Kraftsensor 7 liegt somit im direkten Kraftfluss zwischen dem Antrieb 2, dem elastischen Element 4 und der Elektrode 3. Ein Anschlagstift 72 ist mit einer Führungswelle 75 des elastischen Elements 4 verbunden. Er ermöglicht im Zusammenspiel mit einer Stellmutter 73, die mittels einer Verdrehsicherung über O-Ring an einer Verlängerung des Antriebs 2 fest montiert ist, einen einfachen Ein- und Ausbau des Kraftsensors 7. Dieses Zusammenspiel ist weiter unten im Detail beschrieben.

Eine zweite Stellmutter 74, welche auf der Führungswelle 75 montiert ist, dient dazu, eine Vorspannung des elastischen Elements 4 einzustellen.

Figur 3A zeigt eine Frontalansicht eines Schweißkopfes 1 mit einem Schnitt durch den Schweißkopf 1. Gezeigt sind erneut ein Antrieb 2, eine Elektrode 3 und ein elastisches Element 4, welche auf einer Wirkungslinie 5 linear angeordnet sind. Weiterhin gut zu erkennen sind eine Distanzhülse 21 und Elektrodenführungen 30. Zusätzlich zu einem Zylinderhub Z, einem Federweg F und einem Elektrodehub E ist in Figur 3A auch eine Vorspannung V eingezeichnet, um welche das elastische Element 4 vorgespannt wird. Die genannten Elemente haben die gleiche Funktion wie zuvor beschrieben.

Weiterhin zeigt Figur 3A einen Kraftsensor 7, welcher zwischen dem elastischen Element 4 und der Elektrode 3 angeordnet ist. Der Kraftsensor 7 liegt somit im direkten Kraftfluss zwischen dem Antrieb 2, dem elastischen Element 4 und der Elektrode 3. Ein Anschlagstift 72 ist mit einer Führungswelle 75 des elastischen Elements 4 verbunden. Er ermöglicht im Zu-sammenspiel mit einer Stellmutter 73, die mittels einer Ver-drehsicherung über O-Ring an einer Verlängerung des Antriebs 2 fest montiert ist, einen einfachen Ein- und Ausbau des Kraftsensors 7. Dieses Zusammenspiel ist weiter unten im Detail beschrieben.

Eine zweite Stellmutter 74, welche auf der Führungswelle 75 montiert ist, dient dazu, die Vorspannung V des elastischen Elements 4 einzustellen.

Figur 3B zeigt einen Schweißkopf 1 in einer Seitenansicht. Neben einem Antrieb 2, einem elastischen Element 4 und einer Elektrode 3, welche erneut in einer Wirkungslinie 5 linear angeordnet sind, zeigt Figur 3B auch eine Distanzhülse 21, einen Sensor 8 und einen Anschluss für eine Spannungsmessleitung 50. Der Anschluss für eine Spannungsmessleitung 50 dient hierbei einer Messung eines Spannungsabfalls zwischen den Elektroden. Die anderen Elemente haben die gleiche Funktion wie zuvor beschrieben.

Weiterhin zeigt Figur 3B einen Kraftsensor 7, welcher zwi-schen dem elastischen Element 4 und der Elektrode 3 angeord-net ist. Der Kraftsensor 7 liegt somit im direkten Kraftfluss zwischen dem Antrieb 2, dem elastischen Element 4 und der Elektrode 3. Ein Anschlagstift 72 ist mit einer Führungswelle 75 des elastischen Elements 4 verbunden. Er ermöglicht im Zu-sammenspiel mit einer Stellmutter 73, die mittels einer Verdrehsicherung über O-Ring an einer Verlängerung des Antriebs 2 fest montiert ist, einen einfachen Ein- und Ausbau des Kraftsensors 7. Dieses Zusammenspiel ist weiter unten im Detail beschrieben.

Eine zweite Stellmutter 74, welche auf der Führungswelle 75 montiert ist, dient dazu, eine Vorspannung des elastischen Elements 4 einzustellen.

Figur 3C zeigt eine Aufsicht auf einen Schweißkopf 1. Hierbei ist teilweise ein Schnitt durch den Schweißkopf 1 gezeigt, wobei insbesondere eine Elektrode 3 und ein Antrieb 2 zu er-kennen sind.

Im Folgenden wird ein Ausführungsbeispiel für den Einbau eines Kraftsensors in einen Schweißkopf beschrieben, welches zumindest überwiegend im Tipp-Betrieb durchgeführt wird. Das Ausführungsbeispiel beginnt mit einem in den Figuren nicht gezeigten ersten und optionalen Montageszustand, welcher dem in Figur 1 gezeigten vierten Betriebszustand 14 entspricht. Im ersten Montageszustand beträgt ein Abstand zwischen der in Figur 1 gezeigten Stellmutter 73 und dem Anschlagstift 72 1mm.

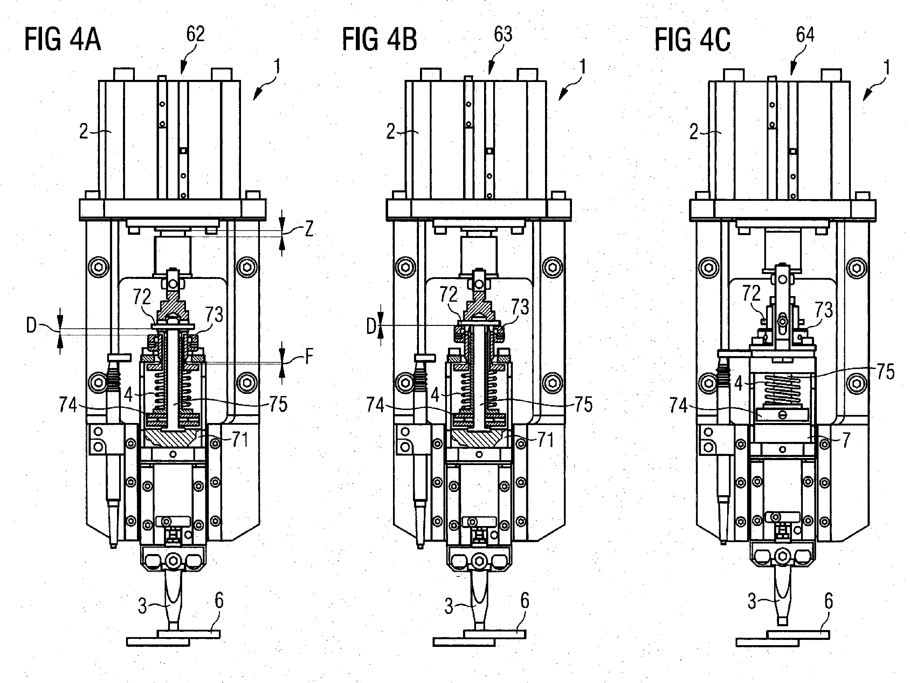

Figur 4A zeigt einen zweiten Montagezustand 62 eines Schweißkopfes 1 zum Einbau eines Kraftsensors. Neben einem Antrieb 2, einem elastischen Element 4 und einer Elektrode 3 ist ein Distanzstück 71 gezeigt, welches zwischen dem elastischen Element 4 und der Elektrode 3 angeordnet ist. Ein Anschlagstift 72 ist mit einer Führungswelle 75 des elastischen Elements 4 verbunden. Eine Stellmutter 73 ist mittels einer Verdrehsicherung über O-Ring an einer Verlängerung des Antriebs 2 fest montiert. Eine zweite Stellmutter 74 ist auf der Führungswelle 75 montiert.

Um den zweiten Montagezustand 62 herzustellen, wird die Elektrode 3 während einem Ausfahren eines pneumatischen Zy-linders des Antriebs 2 vorgeschoben, bis sie auf ein Werkstück 6 aufsetzt. Das elastische Element 4 wird um einen Federweg F während dem Ausfahren des pneumatischen Zylinders komprimiert, nachdem die Elektrode 3 auf das Werkstück 6 auf-gesetzt hat. Aufgrund der Kompression des elastischen Elements 4 vergrößert sich ein Abstand D zwischen der Stellmutter 73 und dem Anschlagstift 72 auf 1mm plus den Federweg F.

Durch Drehung der Stellmutter 73 gegen den Anschlagstift 72 wird nun ein dritter Montagezustand 63 erreicht, welcher in Figur 4B gezeigt ist. Die Bezugszeichen in Figur 4B bezeichnen hierbei die gleichen Elemente wie in Figur 4A.
Die Drehung der Stellmutter 73 gegen den Anschlagstift 72 bewirkt, dass sich das elastische Element 4 nicht mehr um den Federweg F entspannen kann. Entsprechend verringert sich der Abstand D auf Null.

Durch Einfahren des pneumatischen Zylinders wird der Schweiß-kopf 1 nun in einen vierten Montagezustand 64 überführt wird, der in Figur 4C gezeigt ist. Die Bezugszeichen in Figur 4C bezeichnen hierbei die gleichen Elemente wie in Figur 4A. Im vierten Montagezustand 64 ist ein Kraftschluss zwischen dem elastischen Element 4 und dem Distanzstück 71 offen. Das Dis-tanzstück 71 kann darum einfach aus dem Schweißkopf 1 entnommen und durch einen Kraftsensor 7 ersetzt werden.

In einem fünften, in den Figuren nicht näher gezeigten Montagezustand wird der pneumatische Zylinder erneut ausgefahren, wobei die Elektrode 3 erneut auf das Werkstück 6 aufsetzt, woraufhin die Stellmutter 73 in ihre ursprüngliche Position zurückgedreht wird. Damit ist der Kraftschluss zwischen dem elastischen Element 4 und dem Kraftsensor 7 für den späteren Betrieb wieder geschlossen.

Somit ermöglicht die Zuordnung der Stellmutter 73 zum An-schlagstift 72 bzw. deren Formschluss im Tipp-Betrieb eine einfache Unterbrechung des Kraftflusses zwischen dem elasti-schen Element 4 und der Elektrode 3 und damit einen einfachen Einbau des Kraftsensors 7. Abweichend von diesem Ausführungs-beispiel kann auch ein bereits montierter Kraftsensor ausgebaut oder ausgetauscht werden.

Die genannten Ausführungsformen, Weiterbildungen und Ausfüh-rungsbeispiele lassen sich frei miteinander kombinieren.

## Patentansprüche

1. Schweißkopf (1) mit einem Kraftsensor (7),
- bei dem ein Antrieb (2), ein elastisches Element (4), der Kraftsensor (7) und eine beweglich gelagerte Elektrode (3) in einer Linie angeordnet sind, so dass eine Wirkungslinie (5) einer Kraft, welche ausgehend von dem Antrieb (2) oder dem elastischen Element (4) auf die Elektrode (3) wirkt, zentrisch durch den Kraftsensor (7) und die Elektrode (3) verläuft,
**dadurch gekennzeichnet, dass**
- das elastische Element (4) zwischen dem Antrieb (2) und dem Kraftsensor (7) angeordnet ist, und
- der Schweißkopf (1) mit einem Stellelement ausgerüstet ist, insbesondere einer Stellmutter (73), welches mit dem Antrieb (2) fest verbunden, aber in Relation zum Antrieb (2) verstellbar ist, und welches in einem komprimierten Zustand des elastischen Elements (4) auf Anschlag mit einem Anschlagelement, insbesondere einem Anschlagstift (72), welches mit einer Führungswelle (75) des elastischen Elements (4) fest verbunden ist, stellbar ist, wodurch das elastische Element (4) in dem komprimierten Zustand fixierbar ist.

2. Schweißkopf (1) nach Anspruch 1,
- bei dem das Stellelement eine Stellmutter (73) ist, welche mit einem O-Ring gegen Verdrehung gesichert ist.

3. Schweißkopf (1) nach Anspruch 1 oder 2,
- bei dem das elastische Element (4) eine Feder, insbesonde-re eine Schraubenfeder, ist.

4. Schweißkopf (1) nach einem der vorangegangenen Ansprüche,
- bei dem der Antrieb (2) aus mindestens einem pneumatischen Zylinder (20) besteht.

5. Schweißkopf (1) nach Anspruch 4,
- eingerichtet zum Vorschub der Elektrode (3) um einen Elektrodenhub (E) während eines Ausfahrens des pneumatischen Zylinders (20), bis die Elektrode (3) auf ein Werkstück (6) aufsetzt,
- eingerichtet zur Kompression des elastischen Elements (4) um einen Federweg (F) während des Ausfahrens des pneumatischen Zylinders (20), nachdem die Elektrode (3) auf das Werkstück (6) aufgesetzt hat, wobei der Federweg (F) die Differenz eines Zylinderhubs (Z) und des Elektrodenhubs (E) bildet und gemeinsam mit einer Vorspannung des elastischen Elements (4) eine Schweißkraft definiert, welche auf das Werkstück (6) ausgeübt wird, und
- eingerichtet zum Vorschub der Elektrode (3) um einen Nachsetzweg (N) während eines Schweißvorgangs mithilfe des elastischen Elements (4), wobei die Kompression des elastischen Elements (4) um den Nachsetzweg (N) vermindert wird.

6. Schweißkopf (1) nach Anspruch 5,
- mit einem Sensor (8) zur Erkennung eines Ausbleibens der Kompression des elastischen Elements (4) während des Ausfahrens des pneumatischen Zylinders (20), wodurch ein Fehlen eines Werkstücks (6) detektierbar ist.

7. Schweißkopf (1) nach Anspruch 5 oder 6,
- mit einem Messtaster (9), angeordnet zur Messung des Nachsetzwegs (N) der Elektrode (3).

8. Schweißkopf (1) nach einem der vorangegangenen Ansprüche,
- bei dem die Elektrode (3) zwischen zwei beidseitig ange-ordneten Elektrodenführungen (30), insbesondere Kugelführungen, beweglich geführt ist.

9. Schweißkopf (1) nach einem der vorangegangenen Ansprüche,
- mit einer Kühlwasserdurchführung.

10. Schweißkopf (1) nach einem der vorangegangenen Ansprüche,
- bei dem der Kraftsensor (7) eine Kraftmessdose mit Dehnungsmessstreifen ist.

11. Verwendung eines Schweißkopfs (1), der entsprechend einem der vorangegangenen Ansprüche ausgelegt ist, zum Schweißen, insbesondere Widerstandsschweißen, Widerstands-Pressschweißen oder Widerstands-Punktschweißen, Löten, insbesondere Widerstandslöten, oder Warmnieten.

12. Herstellungsverfahren für einen Schweißkopf (1) nach einem der Ansprüche 1-10, dessen Antrieb (2) aus mindestens einem pneumatischen Zylinder (20) besteht,
- bei dem die Elektrode (3) um einen Elektrodenhub (E) während eines Ausfahrens des pneumatischen Zylinders (20) vorgeschoben wird, bis die Elektrode (3) auf ein Werkstück (6) aufsetzt,
- bei dem das elastische Element (4) um einen Federweg (F) während des Ausfahrens des pneumatischen Zylinders (20) komprimiert wird, nachdem die Elektrode (3) auf das Werkstück (6) aufgesetzt hat, wobei der Federweg (F) die Differenz eines Zylinderhubs (Z) und des Elektrodenhubs (E) bildet und wodurch der Schweißkopf (1) in einen zweiten Montagezustand (62) überführt wird,
- bei dem ein Stellelement, insbesondere eine Stellmutter (73), welches mit dem Antrieb (2) fest verbunden, aber in Relation zum Antrieb (2) verstellbar ist, auf Anschlag mit einem Anschlagelement, insbesondere einem Anschlagstift (72), welches mit einer Führungswelle (75) des elastischen Elements (4) fest verbunden ist, gestellt wird, so dass das elastische Element (4) in seinem komprimierten Zustand fixiert wird, wodurch der Schweißkopf (1) in einen dritten Montagezustand (63) überführt wird,
- bei dem der pneumatische Zylinder (20) eingefahren wird, wodurch der Schweißkopf (1) in einen vierten Montagezustand (64) überführt wird, in welchem der Kraftsensor (7) in den Schweißkopf eingesetzt wird, und
- bei dem der pneumatische Zylinder (20) erneut ausgefahren wird, wobei die Elektrode (3) erneut auf das Werkstück (6) aufsetzt, woraufhin das Stellelement in seine ursprüngliche Position zurückgestellt wird.

## Claims

1. Welding head (1) with a force sensor (7),
- in which a drive (2), an elastic element (4), the force sensor (7) and a movably mounted electrode (3) are arranged in a line, so that a line of effect (5) of a force that acts on the electrode (3) from the drive (2) or from the elastic element (4) runs centrally through the force sensor (7) and the electrode (3),
**characterized in that**
- the elastic element (4) is arranged between the drive (2) and the force sensor (7), and
- the welding head (1) is equipped with an adjusting element, in particular an adjusting nut (73), which is fixedly connected to the drive (2) but is adjustable in relation to the drive (2), and which can be adjusted in a compressed state of the elastic element (4) to stop against a stop element, in particular a stop pin (72), which is fixedly connected to a guiding shaft (75) of the elastic element (4), whereby the elastic element (4) can be fixed in the compressed state.

2. Welding head (1) according to Claim 1,
- in which the adjusting element is an adjusting nut (73), which is secured against turning by an O-ring.

3. Welding head (1) according to Claim 1 or 2,
- in which the elastic element (4) is a spring, in particular a helical spring.

4. Welding head (1) according to one of the preceding claims,
- in which the drive (2) consists of at least one pneumatic cylinder (20).

5. Welding head (1) according to Claim 4,
- designed for advancing the electrode (3) by an electrode displacement (E) during an extension of the pneumatic cylinder (20) until the electrode (3) is placed on a workpiece (6),
- designed for compressing the elastic element (4) by a spring displacement (F) during the extension of the pneumatic cylinder (20) after the electrode (3) has been placed on the workpiece (6), the spring displacement (F) forming the difference between a cylinder displacement (Z) and the electrode displacement (E) and, together with a prestressing of the elastic element (4), defining a welding force that is exerted on the workpiece (6), and
- designed for advancing the electrode (3) by a slipping displacement (N) during a welding operation with the aid of the elastic element (4), the compression of the elastic element (4) being reduced by the slipping displacement (N).

6. Welding head (1) according to Claim 5,
- with a sensor (8) for detecting a non-occurrence of the compression of the elastic element (4) during the extension of the pneumatic cylinder (20), whereby an absence of a workpiece (6) can be detected.

7. Welding head (1) according to Claim 5 or 6,
- with a measuring probe (9), arranged for measuring the slipping displacement (N) of the electrode (3).

8. Welding head (1) according to one of the preceding claims,
- in which the electrode (3) is movably guided between two electrode guides (30), in particular ball guides, arranged on both sides.

9. Welding head (1) according to one of the preceding claims,
- with a cooling water conduit.

10. Welding head (1) according to one of the preceding claims,
- in which the force sensor (7) is a load cell with a strain gauge.

11. Use of a welding head (1), which is designed in accordance with one of the preceding claims, for welding, in particular resistance welding, resistance forge welding or resistance spot welding, soldering, in particular resistance soldering, or hot riveting.

12. Production method for a welding head (1) according to one of Claims 1-10, the drive (2) of which consists of at least one pneumatic cylinder (20),
- in which the electrode (3) is advanced by an electrode displacement (E) during an extension of the pneumatic cylinder (20) until the electrode (3) is placed on a workpiece (6),
- in which the elastic element (4) is compressed by a spring displacement (F) during the extension of the pneumatic cylinder (20) after the electrode (3) has been placed on the workpiece (6), the spring displacement (F) forming the difference between a cylinder displacement (Z) and the electrode displacement (E) and the welding head (1) thereby being transferred into a second assembled state (62),
- in which an adjusting element, in particular an adjusting nut (73), which is fixedly connected to the drive (2) but is adjustable in relation to the drive (2) is adjusted to stop against a stop element, in particular a stop pin (72), which is fixedly connected to a guiding shaft (75) of the elastic element (4), so that the elastic element (4) is fixed in its compressed state, whereby the welding head (1) is transferred into a third assembled state (63),
- in which the pneumatic cylinder (20) is retracted, whereby the welding head (1) is transferred into a fourth assembled state (64), in which the force sensor (7) is inserted into the welding head, and
- in which the pneumatic cylinder (20) is extended once again, whereby the electrode (3) is placed once again on the workpiece (6), whereupon the adjusting element is returned to its original position.

## Revendications

1. Tête à souder (1) dotée d'un capteur de force (7),
- dans laquelle un mécanisme d'entraînement (2), un élément élastique (4), le capteur de force (7) et une électrode (3) montée de manière mobile sont disposés en ligne, de telle sorte qu'une ligne d'action (5) d'une force agissant sur l'électrode (3) depuis le mécanisme d'entraînement (2) ou l'élément élastique (4) traverse le capteur de force (7) et l'électrode (3) en leur centre,
**caractérisée en ce que**
- l'élément élastique (4) est disposé entre le mécanisme d'entraînement (2) et le capteur de force (7), et
- la tête à souder (1) est équipée d'un élément de réglage, en particulier d'un écrou de réglage (73), qui est solidaire du mécanisme d'entraînement (2) mais réglable par rapport au mécanisme d'entraînement (2) et qui, dans l'état comprimé de l'élément élastique (4), peut être mis en butée par un élément de butée, en particulier une goupille de butée (72), qui est solidaire d'un arbre de guidage (75) de l'élément élastique (4), permettant ainsi de fixer l'élément élastique (4) dans l'état comprimé.

2. Tête à souder (1) selon la revendication 1,
- dans laquelle l'élément de réglage est un écrou de réglage (73) bloqué en rotation par un joint torique.

3. Tête à souder (1) selon les revendications 1 ou 2,
- dans laquelle l'élément de réglage (4) est un ressort, en particulier un ressort hélicoïdal.

4. Tête à souder (1) selon l'une des revendications précédentes,
- dans laquelle le mécanisme d'entraînement (2) comprend au moins un vérin pneumatique (20).

5. Tête à souder (1) selon la revendication 4,
- configurée pour faire avancer l'électrode (3) d'une course d'électrode (E) pendant une descente du vérin pneumatique (20) jusqu'à ce que l'électrode (3) vienne se poser sur une pièce à travailler (6),
- configurée pour comprimer l'élément élastique (4) d'une course de ressort (F) pendant la descente du vérin pneumatique (20) une fois que l'électrode s'est posée sur la pièce (6), la course de ressort (F) formant la différence entre une course de vérin (Z) et la course d'électrode (E) et définissant, conjointement avec une précontrainte de l'élément élastique (4), une force de soudage exercée sur la pièce (6), et
- configurée pour faire avancer l'électrode d'une course de réajustage (N) pendant une opération de soudage à l'aide de l'élément élastique (4), la compression de l'élément élastique (4) étant diminuée de la course de réajustage (N).

6. Tête à souder (1) selon la revendication 5,
- dotée d'un capteur (8) pour déceler une absence de compression de l'élément élastique (4) pendant la descente du vérin pneumatique (20), ce qui permet de détecter l'absence d'une pièce (6).

7. Tête à souder (1) selon les revendications 5 ou 6,
- dotée d'un palpeur de mesure (9), agencé pour mesurer la course de réajustage (N) de l'électrode (3).

8. Tête à souder (1) selon l'une des revendications précédentes,
- dans laquelle l'électrode (3) est guidée de manière mobile entre deux guides d'électrodes (30) montés des deux côtés, en particulier des glissières à billes.

9. Tête à souder (1) selon l'une des revendications précédentes,
- dotée d'un passage d'eau de refroidissement.

10. Tête à souder (1) selon l'une des revendications précédentes,
- dans laquelle le capteur de force (7) est une boîte dynamométrique à jauge extensométrique.

11. Utilisation d'une tête à souder (1) conçue selon l'une des revendications précédentes pour le soudage, en particulier le soudage par résistance avec pression ou par points, le brasage, en particulier le brasage par résistance, ou le rivetage à chaud.

12. Procédé de fabrication pour une tête à souder (1) selon l'une des revendications 1-10, dont le mécanisme d'entraînement (2) comprend au moins un vérin pneumatique (20),
- selon lequel on fait avancer l'électrode (3) d'une course d'électrode (E) pendant une descente du vérin pneumatique (20) jusqu'à ce que l'électrode (3) vienne se poser sur une pièce à travailler (6),
- selon lequel on comprime l'élément élastique (4) d'une course de ressort (F) pendant la descente du vérin pneumatique (20) une fois que l'électrode (3) s'est posée sur la pièce (6), la course de ressort (F) formant la différence entre une course de vérin (Z) et la course d'électrode (E) et la tête à souder (1) pouvant ainsi passer dans un deuxième état de montage (62),
- selon lequel un élément de réglage, en particulier un écrou de réglage (73), solidaire du mécanisme d'entraînement (2) mais réglable par rapport au mécanisme d'entraînement (2), est mis en butée par un élément de butée, en particulier une goupille de butée (72), solidaire d'un arbre de guidage (75) de l'élément élastique (4), de sorte à fixer l'élément élastique (4) dans son état comprimé, permettant ainsi de faire passer la tête à souder (1) dans un troisième état de montage (63),
- selon lequel on fait remonter le vérin pneumatique (20), permettant ainsi de faire passer la tête à souder (1) dans un quatrième état de montage (64) dans lequel le capteur de force (7) est introduit dans la tête à souder, et
- selon lequel on fait redescendre le vérin pneumatique (20), l'électrode (3) se posant alors à nouveau sur la pièce (6), pour ensuite faire revenir l'élément de réglage dans sa position initiale.
